Europäisches Patentamt

European Patent Office

Office européen des brevets

(19)

(11) Veröffentlichungsnummer: **0 356 747**
**A2**

(12) **EUROPÄISCHE PATENTANMELDUNG**

(21) Anmeldenummer: **89114351.3**

(22) Anmeldetag: **03.08.89**

(51) Int. Cl.5: **A01G 7/02**

(30) Priorität: **31.08.88 DE 3829560**

(43) Veröffentlichungstag der Anmeldung:
**07.03.90 Patentblatt 90/10**

(84) Benannte Vertragsstaaten:
**BE DE FR NL**

(71) Anmelder: **Linde Aktiengesellschaft**
**Abraham-Lincoln-Strasse 21**
**D-6200 Wiesbaden(DE)**

(72) Erfinder: **Matt, Konrad, Dr., Dipl.-Chem.**
**Leonrodstrasse 12/2**
**D-8000 München 19(DE)**

(74) Vertreter: **Schaefer, Gerhard, Dr.**
**Linde Aktiengesellschaft Zentrale**
**Patentabteilung**
**D-8023 Höllriegelskreuth(DE)**

(54) **Verfahren und Vorrichtung zur Intensivaufzucht von Pflanzen.**

(57) Die Erfindung betrifft ein Verfahren und eine
Vorrichtung zur Intensivaufzucht von Pflanzen (1) auf
einem Trägermaterial (5), insbesondere Bodenmaterial. Zur Erhöhung der Pflanzenausbeute bei Vermeidung der Akkumulation umweltgefährdender bzw.
humanphysiologisch bedenklicher Stoffe in Boden
und Pflanzen wird vorgeschlagen, in das Trägermaterial (5) ein sauerstoffhaltiges Gas einzuleiten. Vorzugsweise wird hierbei technisch reiner Sauerstoff
verwendet.

EP 0 356 747 A2

## Verfahren und Vorrichtung zur Intensivaufzucht von Pflanzen

Die Erfindung betrifft ein Verfahren zur Förderung des Wachstums von auf einem Trägermaterial, insbesondere Bodenmaterial, wachsenden Pflanzen sowie eine Vorrichtung zur Durchführung des Verfahrens.

Es sind verschiedene Methoden bekannt, um das Wachstum von Nähr-, Nutz- und Zierpflanzen zu intensivieren. Dabei wird stets versucht, auf einer gegebenen Kulturfläche einen möglichst hohen Ertrag an Pflanzen zu erzielen. Dies ist besonders bei Aufzucht der Pflanzen in Treib- oder Gewächshäusern wichtig, da dort eine Vergrößerung der Kulturfläche mit erheblichen Investitionen, z. B. für erforderliche technische Ausstattungen, verbunden ist.

Die klassischen Intensivzuchtmethoden bedienen sich dabei einer äußeren Zufuhr physiologisch essentieller Elemente, wie Sauerstoff, Stickstoff und Phosphor, vor allem in Form anorganischer Donatoren, wie z. B. Nitraten, Amoniumsalzen und Phosphaten. Diese Maßnahme ist vor allem dadurch begründet, daß sowohl Sauerstoff selbst, als infolgedessen auch von aeroben Mikroorganismen aus dem Bodenmaterial metabolisch freigesetzte Nährstoffe im Boden nur in begrenztem Umfang verfügbar sind und somit limitierend auf die Wuchsleistung der Pflanzen wirken.

Insbesondere Nitratdüngung kann aber bei unsachgemäßer Anwendung zu Akkumulationen vom Nitrat selbst oder von durch Reduktion freigesetztem Nitrit in der Pflanzensubstanz führen, die häufig humanphysiologisch bedenkliche Werte annehmen. Außerdem können durch Überdüngung Nitrate und Phosphate in Grund- und Oberflächenwasser gelangen. Als Folge können erhöhte Nitratkonzentrationen im Trinkwasser auftreten, die Menschen gefährden. Andererseits können durch Eutrophierung der Gewässer erhebliche ökologische Schäden entstehen.

Der vorliegenden Erfindung liegt daher die Aufgabe zugrunde, ein Verfahren der eingangs genannten Art so auszugestalten, daß eine Erhöhung der Pflanzenausbeute je Fläche- und Zeiteinheit erreicht wird, ohne daß umweltgefährdende Stoffe freigesetzt werden bzw. Akkumulationen humanphysiologisch bedenklicher Stoffe in den Pflanzen auftreten.

Diese Aufgabe wird erfindungsgemäß dadurch gelöst, daß in das Trägermaterial sauerstoffhaltiges Gas eingeleitet wird.

Der Erfindung liegt die Erkenntnis zugrunde, daß Sauerstoff im Stoffwechsel höherer Pflanzen zur Oxidation diverser hydrierter Coenzyme im Rahmen ihrer Atmungskette notwendig ist. Hierbei wird von Cytochrom $a_3$ (Cytochromoxidase) Sauerstoff direkt mit aus dem aus vorangehenden Schritten der biologischen Oxidation freigesetzten Wasserstoff zu Wasser umgesetzt, wobei freiwerdende Energie im Rahmen der Atmungskette zur Bildung von Adenosintriphosphat (ATP) herangezogen wird (Atmungskettenphosphorylierung). Obwohl die Details der Atmungskette höherer Pflanzen derzeit noch ungeklärt sind, steht fest, daß die mit Cytochrom $a_3$ verbundenen Redoxvorgänge die Anwesenheit von freiem Sauerstoff erfordern.

Die Zufuhr von Sauerstoff ist also für eine einwandfreie Funktion der Atmungskette essentiell und kann bei vorgenanntem Schritt in der Atmungskette nicht durch andere Sauerstoff-Träger ersetzt werden.

Das Trägermaterial besteht üblicherweise aus Bodenmaterial, d. h. aus Erdboden, Humus etc. Es ist aber auch möglich, das erfindungsgemäße Verfahren z. B. bei Hydrokulturen anzuwenden. Durch das erfindungsgemäße Verfahren stehen dem Wurzelwerk der Pflanzen jederzeit ausreichende Konzentrationen an Sauerstoff aus Bodenluft und in gelöster Form aus Bodenfeuchtigkeit zur Verfügung. Die Metabolisierung des Bodenmaterials durch aerobe Mikroorganismen wird erheblich beschleunigt. Aus dem aeroben Abbau organischer Bodensubstanz werden dabei Wertstoffe wie Stickstoff-und Phosphor-Verbindungen, vermehrt freigesetzt. Zusätzliche Dosierungen von Nährstoffen können daher reduziert werden. Freigesetztes Kohlendioxid kann von den Pflanzen im Rahmen der Photosynthese genutzt werden. Dabei treten vermehrte Konzentrationen von Kohlendioxid vor allem in Bodennähe auf, wo sie von den Pflanzen besonders gut verwertet werden können.

Konkurrierende anaerobe Stämme, die Hemm- oder Giftstoffe, wie z. B. $H_2S$ oder $CH_4$ produzieren, werden wirkungsvoll unterdrückt, eventuell vorhandene Konzentrationen von z. B. Sulfiden chemisch oder biologisch oxidiert.

Eine besonders hohe Pflanzenausbeute ist dadurch möglich, daß als sauerstoffhaltiges Gas mit Sauerstoff hochangereicherte Luft oder technisch reiner Sauerstoff verwendet wird. In diesem Fall kann die Bodenfeuchtigkeit eine ca. 4,8fach höhere Sauerstoff-Konzentration aufnehmen, als bei einer Luftbegasung.

Insbesondere bei Anwesenheit und/oder Zugabe stickstofffixierender Bakterienstämme ist eine Beimengung von Stickstoff zum sauerstoffhaltigen Gas vorgesehen, der zur Deckung des Stickstoffbedarfs der Pflanzen beiträgt. Desgleichen ist eine Zudosierung von Kohlendioxid als C-Quelle vorteilhaft, sofern dadurch keine Versäuerung des Bodens eintritt.

In einer bevorzugten Ausführungsform der Erfindung wird das sauerstoffhaltige Gas ca 5 - ca. 40 cm unterhalb der Wurzelunterkanten der Pflanzen in das Trägermaterial eingeleitet. Dadurch ist eine gleichmäßige Verteilung des sauerstoffhaltigen Gases und eine ausreichende Versorgung aller Wurzelabschnitte der Pflanzen gewährleistet.

Die Einleitung des sauerstoffhaltigen Gases kann entweder in langsamem Strom kontinuierlich erfolgen, oder in zeitlichen Intervallen, z. B. über eine Zeitschaltuhr. Letztere Methode bietet den Vorteil, daß eine Ausbildung von direkt zur Oberfläche reichenden Poren oder Kaminen, die zu Gasverlusten führen, gehemmt wird.

In Weiterbildung des Erfindungsgedankens wird zusätzlich zur Einleitung des sauerstoffhaltigen Gases in das Trägermaterial außerhalb des Trägermaterials ein erhöhter Kohlendioxid-Partialdruck und/oder Sauerstoff-Partialdruck hergestellt. Bei einer Pflanzenaufzucht in Treibhäusern wird hierzu zweckmäßigerweise Kohlendioxid bzw. Sauerstoff zur Treibhausatmosphäre zugegeben.

Durch Erhöhung des Kohlendioxid-Partialdrucks wird eine Intensivierung der Photosynthese erreicht. Es ist dabei vorgesehen, den Kohlendioxid-Partialdruck in Abhängigkeit des Kohlendioxid-Gehalts der Treibhausatmosphäre zu regeln, da dadurch in optimaler Weise Verluste in die Umgebung und Kohlendioxid-Verbrauch der Pflanzen kompensiert werden können.

Andererseits werden durch Erhöhung des Sauerstoff-Partialdrucks photorespiratorische Prozesse im oberirdischen Teil der Pflanzen aktiviert. Auch hier erfolgt vorteilhafterweise eine Steuerung in Abhängigkeit vom Sauerstoff-Gehalt der Treibhausatmosphäre.

Das erfindungsgemäße Verfahren weist gegenüber herkömmlichen Intesivzuchtverfahren insgesamt den entscheidenden Vorteil auf, daß die Zugabe von Düngemitteln reduziert werden bzw. völlig unterbleiben kann. Eine Akkumulation von physiologisch bedenklichen bzw. grundwasserschädigenden Stoffen (z. B. Nitrat) in Boden und Pflanzen wird vermieden. Durch Aufhebung von Sauerstoff-Mangel im Boden wird ein rascherer Aufwuchs der Pflanzen bewirkt, ebenso wird der mikrobielle Abbau organischen Bodenmaterials beschleunigt, wodurch Nährstoffe freigesetzt werden. Gift- und Hemmstoffe (z. B. Sulfide) werden auf chemischem bzw. biologischem Weg oxidativ entfernt. Durch den beschleunigten Aufwuchs wird eine bessere Ausnutzung kostenintensiver Einrichtungen, wie Treib- und Gewächshäuser, erreicht.

Obwohl das Verfahren vor allem bei einer Anwendung in Treib- bzw. Gewächshäusern von Interesse sein dürfte, ist es auch für Freilandkulturen geeignet. Auch in diesem Fall ist ein rascherer Aufwuchs der Pflanzen gewährleistet.

Eine Vorrichtung zur Durchführung des Verfahrens besteht aus einem Trägermaterial, insbesondere Bodenmaterial, auf dem Pflanzen angesiedelt sind.

Erfindungsgemäß ist eine derartige Vorrichtung dadurch gekennzeichnet, daß innerhalb des Trägermaterials mindestens eine Gasverteileinrichtung angeordnet ist, die über eine Zuleitung mit einer Gasversorgungseinrichtung für sauerstoffhaltiges Gas in Verbindung steht.

Vorteilhafterweise ist die Gasverteileinrichtung als perforierter Schlauch ausgebildet, der horizontal im Trägermaterial verlegt ist. Der Schlauch weist eine Lochdichte auf, die an den Gasdurchsatz angepaßt ist. Zweckmäßigerweise sind in dem Trägermaterial, das bevorzugt aus Erdboden, Humus etc. besteht, mehrere perforierte Schläuche horizontal in einem Abstand von ca 10 - ca. 80 cm von einander verlegt. Dadurch wird eine besonders gleichmäßige Begasung des Bodenmaterials und eine opitmale Versorgung der Pflanzenwurzeln mit Sauerstoff erreicht. Die Ausbildung der Gasverteileinrichtung als perforierter Schlauch ermöglicht zudem aufgrund seiner Verschlammungs- und Bewuchsunempfindlichkeit einen langzeitig gleichmäßigen Gaseintrag.

In einer anderen Ausgestaltungsform der erfindungsgemäßen Vorrichtung ist die Gaseintragsvorrichtung als Silikon-Membranschlauch und /oder Kerzenbelüfter und/oder Plattenbelüfter und/oder als gelochtes Rohr ausgebildet. Kerzen- bzw. Plattenbelüfter sind beispielsweise in der Abwassertechnik weit verbreitet.

Zum Schutz der Gasverteileinrichtung, z. B. bei zur Entnahme der Pflanzen nötigen Arbeiten, ist zweckmäßigerweise die Anbringung einer gasundurchlässigen Abdeckung über der Gasverteileinrichtung vorgesehen. Hierzu ist über der Gasverteileinrichtung ein Netz und/oder ein Gitter und/oder eine Gewebematte installiert.

Die Gasverteileinrichtung ist bevorzugt ca. 5 - ca. 40 cm unterhalb der Wurzelunterkanten der Pflanzen angebracht. Bei Verwendung mehrerer Gasverteileinrichtungen sind diese vorzugsweise in einem horizontalen Abstand von ca. 10 - ca. 80 cm voneinander angeordnet.

Zur Gasversorgung dienen je nach Projektgröße Flaschen, Flaschenbündel oder Tanks mit tiefkalt verflüssigtem Sauerstoff. Bevorzugt ist die Gasversorgungseinrichtung als Flüssiggastank für tiefkalt verflüssigten Sauerstoff ausgebildet, dem ein Verdampfer nachgeschaltet ist.

Eine andere Ausführungsform sieht vor, die Gasversorgungseinrichtung als Druckgasbehälter für Sauerstoff auszubilden.

Vorzugsweise ist in der Zuleitung zur Gasverteileinrichtung ein fernbedienbares Absperrorgan angeordnet, das zweckmäßigerweise mit einem Taktgeber in Verbindung steht. Auf diese Weise wird eine taktweise Einspülung des sauerstoffhaltigen Gases in zeitlichen Intervallen in das Trägermaterial ermöglicht.

Im folgenden soll die Erfindung anhand eines in einer Figur schematisch dargestellten Ausführungsbeispiels näher erläutert werden.

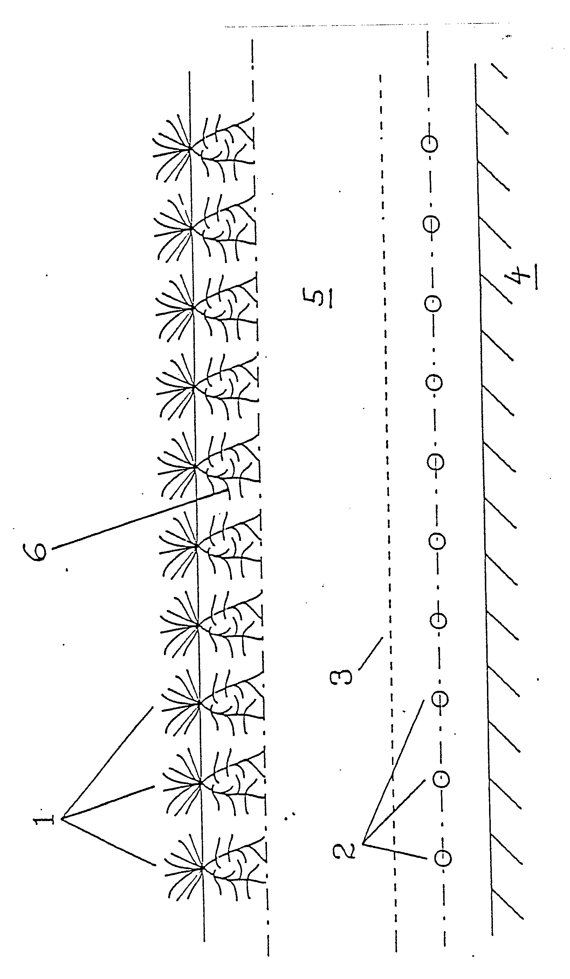

Die Zeichnung zeigt eine Erdschicht, auf der Pflanzen wachsen und in der Begasungsschläuche verlegt sind.

Im vorliegenden Ausführungsbeispiel wird die Intensivaufzucht von Pflanzen in einem Treibhaus beschrieben. Auf einem festen Boden 4 ist Erde 5 bis zu einer Schütthöhe von ca. 40 cm aufgeschüttet. Auf der Erde wachsen Pflanzen 1, deren Wurzeln 6 ca. 10 cm in die Erde 5 hineinragen. Etwa 20 cm unterhalb der Unterkante der Wurzeln 6 sind perforierte Begasungsschläuche 2 horizontal verlegt. Der Abstand der Schläuche 2 voneinander beträgt ca. 50 cm. Die Schläuche 2 stehen mit einem in der Zeichnung nicht dargestellten Flüssiggastank für tiefkalt verflüssigten Sauerstoff in Verbindung. Je m$^3$ Erdmaterial und Stunde werden ca. 1 x 10$^{-3}$ m$^3$ technisch reiner Sauerstoff durch die Begasungsschläuche 2 gefördert. Zum Schutz der Begasungsschläuche 2 ist in einem Abstand von ca. 5 cm oberhalb der Schläuche 2 ein Gitter 3 angebracht. Die Sauerstoff-Zufuhr wird durch eine Zeitschaltuhr gesteuert und erfolgt in zeitlichen Intervallen von ca. 5 Minuten.

**Ansprüche**

1. Verfahren zur Förderung des Wachstums von auf einem Trägermaterial, insbesondere Bodenmaterial wachsenden Pflanzen, dadurch gekennzeichnet, daß in das Trägermaterial (5) sauerstoffhaltiges Gas eingeleitet wird.

2. Verfahren nach Anspruch 1, dadurch gekennzeichnet, daß als sauerstoffhaltiges Gas mit Sauerstoff hochangereicherte Luft oder technisch reiner Sauerstoff verwendet wird.

3. Verfahren nach Anspruch 1 oder 2, dadurch gekennzeichnet, daß dem sauerstoffhaltigen Gas zusätzlich Stickstoff und/oder Kohlendioxid beigemengt wird.

4. Verfahren nach einem der Ansprüche 1 - 3, dadurch gekennzeichnet, daß das sauerstoffhaltige Gas ca. 5 - ca. 40 cm unterhalb der Pflanzen(1) in das Trägermaterial (5) eingeleitet wird.

5. Verfahren nach einem der Ansprüche 1 - 4, dadurch gekennzeichnet, daß das sauerstoffhaltige Gas in zeitlichen Intervallen eingeleitet wird.

6. Verfahren nach einem der Ansprüche 1 - 5, dadurch gekennzeichnet, daß zusätzlich zur Einleitung des sauerstoffhaltigen Gases in das Trägermaterial (5) außerhalb des Trägermaterials (5) ein erhöhter Kohlendioxid-Partialdruck und/oder Sauerstoff-Partialdruck hergestellt wird.

7. Vorrichtung zur Durchführung des Verfahrens nach einem der Ansprüch 1 - 6 mit einem Trägermaterial, insbesondere Bodenmaterial, auf dem Pflanzen angesiedelt sind, dadurch gekennzeichnet, daß innerhalb des Trägermaterials (5) mindestens eine Gasverteileinrichtung (2) angeordnet ist, die über eine Zuleitung mit einer Gasversorgungseinrichtung für sauerstoffhaltiges Gas in Verbindung steht.

8. Vorrichtung nach Anspruch 7, dadurch gekennzeichnet, daß die Gasverteileinrichtung (2) als perforierter Schlauch ausgebildet ist, der horizontal im Trägermaterial (5) verlegt ist.

9. Vorrichtung nach Anspruch 7, dadurch gekennzeichnet, daß die Gasverteileinrichtung (2) als Kerzen- und/oder Plattenbelüfter und/oder gelochtes Rohr ausgebildet ist.

10. Vorrichtung nach einem der Ansprüche der 7 - 9, dadurch gekennzeichnet, daß die Gasverteileinrichtung (2) von mindestens einer Abdeckung (3) überdeckt ist.

11. Vorrichtung nach Anspruch 10, dadurch gekennzeichnet, daß die Abdeckung (3) als Netz und/oder Gitter und/oder Gewebematte ausgebildet ist.

12. Vorrichtung nach einem der Ansprüche 7 - 11, dadurch gekennzeichnet, daß die Gasverteileinrichtung (2) ca. 5 - ca. 40 cm unterhalb der Pflanzen angeordnet ist.

13. Vorrichtung nach einem der Ansprüche 7 - 12, dadurch gekennzeichnet, daß mindestens 2 Gasverteileinrichtungen (2) installiert sind und die Gasverteileinrichtungen (2) in einem horizontalen Abstand von ca. 10 - ca. 80 cm voneinander angeordnet sind.

14. Vorrichtung nach einem der Ansprüche 7 - 13, dadurch gekennzeichnet, daß die Gasversorgungseinrichtung als Flüssiggastank für tiefkalt verflüssigten Sauerstoff ausgebildet ist.

15. Vorrichtung nach einem der Ansprüche 7 - 14, dadurch gekennzeichnet, daß die Gasversorgungseinrichtung als Druckgasbehälter für Sauerstoff ausgebildet ist.

16. Vorrichtung nach einem der Ansprüche 7 - 15, dadurch gekennzeichnet, daß in der Zuleitung zur Gasverteileinrichtung ein fernbedienbares Absperrorgan angeordnet ist.

17. Vorrichtung nach Anspruch 16, dadurch gekennzeichnet, daß das fernbedienbare Absperrorgan mit einem Taktgeber in Verbindung steht.

(G 283)